# FASCICULE DE BREVET EUROPEEN

(11) **EP 2 709 745 B1**
(45) Date de publication et mention de la délivrance du brevet: **01.04.2020**
(21) Numéro de dépôt: 12722446.7
(22) Date de dépôt: 20.04.2012
(51) Int. Cl.: B01D 53/04, B01D 53/047, C01B 3/56, C10K 1/20

(54) **PROCÉDÉ DE PURIFICATION PAR ADSORPTION AVEC RÉGÉNÉRATION AU MOYEN D'UN GAZ COMPRENANT UN CONSTITUANT NON DÉSIRE DANS LE GAZ PURIFIE**
VERFAHREN ZUR REINIGUNG DURCH ADSORPTION MIT REGENERATION ANHAND EINES GASES MIT EINER UNERWÜNSCHTEN KOMPONENTE IM GEREINIGTEN GAS
METHOD FOR PURIFICATION BY MEANS OF ADSORPTION WITH REGENERATION USING A GAS CONTAINING AN UNDESIRED COMPONENT IN THE PURIFIED GAS

(30) Priorité: 16.05.2011 FR 1154216
(43) Date de publication de la demande: 26.03.2014
(73) Titulaire: L'Air Liquide Société Anonyme pour l'Etude et l'Exploitation des Procédés Georges Claude, 75007 Paris (FR)
(72) Inventeur: CARRIERE, Céline, 93250 Villemomble (FR); MONEREAU, Christian, 34000 Montpellier (FR); URRUTIA, Itziar, 48011 Bilbao (ES)
(74) Mandataire: Laigneau, Amandine
(86) Numéro de dépôt international: PCT/FR2012/050863
(87) Numéro de publication internationale: WO 2012/172223

(56) Documents cités:
- EP-A1- 1 698 607
- FR-A1- 2 836 060
- FR-A1- 2 911 289
- FR-A1- 2 917 304
- US-A- 5 897 686
- US-A1- 2006 199 723

## Description

La présente invention concerne un procédé d'épuration par adsorption dans lequel l'adsorbant est cycliquement régénéré, notamment un procédé de type TSA (Temperature Swing Adsorption = adsorption avec variation de température) où l'on épure au moins partiellement un mélange gazeux comportant au moins un constituant principal et au moins une impureté.

Classiquement, un cycle de procédé TSA comporte les étapes suivantes:
a) purification de l'air par adsorption des impuretés à pression super-atmosphérique et à température ambiante,
b) dépressurisation de l'adsorbeur jusqu'à la pression atmosphérique,
c) régénération de l'adsorbant à pression atmosphérique, notamment par les gaz résiduaires, typiquement de l'azote impur provenant d'une unité de séparation d'air et réchauffé jusqu'à une température habituellement entre 100 et 250°C au moyen d'un ou plusieurs échangeurs thermiques,
d) refroidissement à température ambiante de l'adsorbant, notamment en continuant à y introduire ledit gaz résiduaire issu de l'unité de séparation d'air, mais non réchauffé, et
e) repressurisation de l'adsorbeur avec de l'air purifié issu, par exemple, d'un autre adsorbeur se trouvant en phase de production.

Il est connu de régénérer l'adsorbant avec un gaz différent du gaz à traiter.

A titre d'exemple, le document US 5 897 686 décrit le séchage et la décarbonatation de mélange H2/CO par un inerte, en particulier de l'azote. L'adsorbeur est ensuite repressurisé et remis en production.

Cependant dans certains cas, certains composés même inertes peuvent être gênant dans le gaz produit et doivent être exclus ou demeurer sous un seuil donné pour que le gaz produit soit utilisable industriellement.

On peut citer la purification finale des gaz dits ultra-purs qui ne doivent contenir des impuretés qu'au niveau de ppm, voire de ppb ou encore moins.

C'est également le cas pour certaines applications des mélanges H2/CO ou plus généralement du gaz de synthèse.

Plus particulièrement, le mélange gazeux est un gaz de synthèse comprenant de l'hydrogène, du CO, éventuellement du méthane, de l'azote, de l'argon, de l'oxygène et les impuretés principales font partie du groupe eau, méthanol, CO2 avec éventuellement NH3, HCN, des traces d'hydrocarbures C2+...

Le gaz épuré est destiné à être séparé en des fractions enrichies en H2 et/ou CO par exemple dans une unité cryogénique ou à être envoyé suivant des ratios H2/CO déterminés à des unités aval.

Comme indiqué, le gaz de synthèse peut contenir en petite quantité des constituants tels que N2 ou Ar qui viennent soit du gaz naturel ou du charbon utilisés comme matière première, soit de l'oxygène utilisé comme oxydant dans la préparation du gaz de synthèse, soit d'entrée d'air ou de gaz d'inertage dans le gaz d'alimentation au cours de son traitement.

Ces gaz se comportent généralement comme des inertes, parfois comme des poisons, suivant l'utilisation qui est faite des produits issus du gaz de synthèse.

Leur teneur peut donc être limitée par des spécifications que ce soit dans l'hydrogène, le CO ou les mélanges H2/CO destinés à des synthèses diverses (oxo alcool, méthanol..).

Ces limitations peuvent aller de quelques ppm à quelques % molaire, par exemple quelques milliers de ppm dans de l'hydrogène destiné aux raffineries, 3% pour certaines synthèses.

Une séparation de ces gaz est possible mais est généralement couteuse.

Une solution, dans le cas de la purification du gaz de synthèse, est d'utiliser une régénération avec de l'hydrogène pour éviter d'introduire d'autres constituants, en particulier de l'azote. Cependant, cette solution nécessite un recyclage du gaz de régénération pour éviter de le perdre.

Dès lors, un problème qui se pose est d'améliorer les procédés de purification présentant une régénération avec un gaz comprenant un constituant indésirable, qui conduirait à introduire une quantité trop importante de ce constituant indésirable dans le gaz purifié.

Une solution de la présente invention est un procédé TSA de purification par adsorption d'un gaz de synthèse comprenant de l'hydrogène, du CO et/ou du méthane, mettant en oeuvre au moins un adsorbeur présentant au moins un adsorbant sur lequel le monoxyde de carbone s'adsorbe préférentiellement à l'azote et soumis à un cycle de pression comportant au moins une étape d'adsorption, une étape de dépressurisation, une étape de régénération par chauffage au moyen d'un gaz de régénération, une étape de refroidissement de l'adsorbant et une étape de repressurisation, caractérisé en ce que:
- le gaz de régénération comprend de l'azote à plus de 95% molaire ; et
- le cycle de pression comprend un balayage de l'adsorbant, après la phase de chauffage ou la phase de refroidissement, au moyen d'un gaz de balayage qui est du gaz de synthèse, de préférence du gaz de synthèse épuré.

Par définition le gaz de balayage n'est pas mélangé, en sortie de l'adsorbeur, avec le mélange gazeux à purifier ou avec le flux enrichi en constituant principal puisqu'il sortira enrichi en constituant « non désiré ».

Afin de respecter cette concentration maximale, une solution est de réguler la quantité de gaz de balayage en contrôlant le débit du gaz de balayage et/ou la durée du balayage.

Selon le cas le procédé selon l'invention peut présenter une ou plusieurs des caractéristiques suivantes :
- on régule le débit du gaz de balayage et/ou la durée du balayage de manière à éliminer de l'adsorbant au moins une partie du constituant « non désiré » devant présenter une concentration inférieure ou égale à 5% molaire dans le flux enrichi en constituant principal ;
- l'adsorbeur fonctionne en continu ;
- l'adsorption s'effectue à une première pression P1 ; la régénération s'effectue à une seconde pression P2 inférieure à P1 ; et le balayage s'effectue une troisième pression P3 inférieure à P1, de préférence égale ou inférieure à P2 ;
- le mélange gazeux à traiter est un gaz de synthèse issu d'un procédé de lavage au méthanol en basse température, le gaz de régénération contient majoritairement de l'azote et le gaz de balayage correspond à une fraction du mélange gazeux à purifier ;

Classiquement, les étapes de dépressurisation et de repressurisation sont situées respectivement après et avant la phase de production.

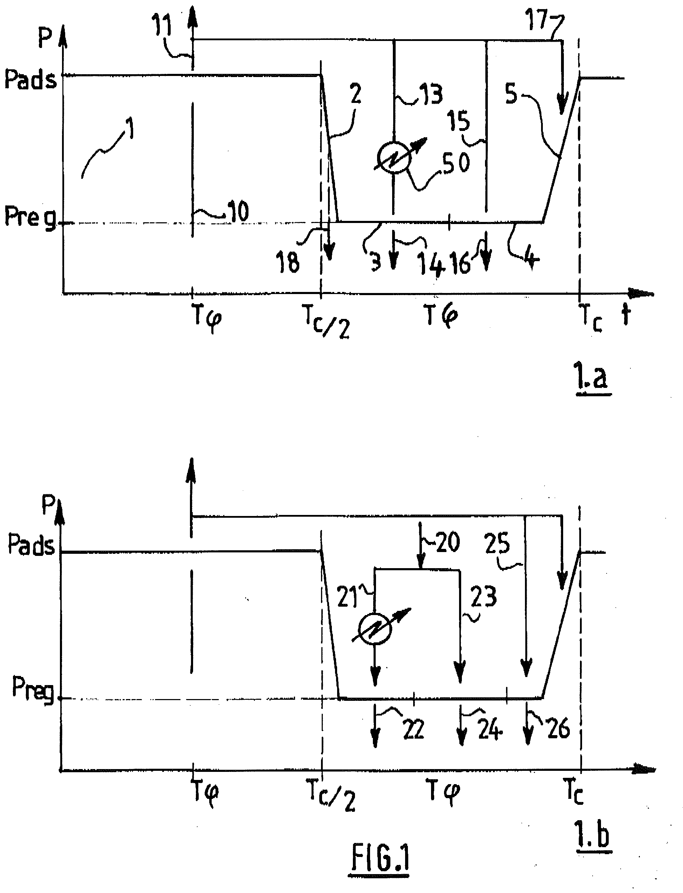

L'invention va à présente être décrite plus en détail à l'aide des figures 1 à 3.

La Figure 1 schématise une unité de séchage et décarbonatation de syngas destiné à être fractionné dans une boîte froide située juste à l'aval. L'épuration se fait au moyen d'une unité d'adsorption de type TSA composée généralement de deux adsorbeurs. Dans la configuration la plus simple représentée par le schéma 1.a, un adsorbeur est en phase de production (d'adsorption des impuretés) pendant que l'autre est régénéré. On a représenté la durée du cycle complet pour un des deux adsorbeurs. Le temps de cycle étant Tc, on a une phase de production de durée Tf = Tc/2 et une phase de régénération d'égale durée. Le deuxième adsorbeur suit le même cycle avec un décalage d'un temps de phase. Ainsi, il y a toujours une bouteille en production.

La pression d'adsorption Pads est généralement comprise entre 15 et 70 bar abs, quant à la pression de régénération, elle peut être comprise suivant le type de procédé entre la pression d'adsorption et la pression atmosphérique.

Dans l'exemple relatif à la Figure 1, on a retenu le cas d'une pression de régénération sensiblement inférieure à la pression d'adsorption. On a donc les étapes suivantes :1 adsorption, 2 depressurisation, 3 chauffage, 4 refroidissement et 5 repressurisation. L'adsorbeur recommence ensuite une étape d'adsorption. On notera qu'il peut y avoir plusieurs autres sous étapes de courte durée (quelques secondes à quelques minutes maximum) correspondant à des temps de manœuvre des vannes, des vérifications de position des vannes...qui ne modifient pas le principe du cycle.

Notons que dans les TSA mis en œuvre ces dernières années, les phases de chauffage et de refroidissement ne sont pas totalement distinctes car en début de « refroidissement » », le gaz pousse le front de chaleur dans le lit d'adsorbant et de ce fait continue localement la phase de chauffage et de régénération d'une partie de l'adsorbant. Il est souvent convenu de dire que l'on arrête la phase de chauffage au moment où l'on arrête le chauffage du gaz de régénération. La fin du refroidissement est généralement définie par le moment où le gaz de régénération en sortie de lit- ou en sortie d'adsorbeur suivant la position de la sonde de température- atteint une valeur objectif, par exemple 15°C plus chaud que le gaz de régénération en entrée d'adsorbeur ou selon un autre critère 10°c plus chaud par exemple que la température du gaz à épurer. Ce delta de température dépend des conditions opératoires et des performances recherchées. Il sera compris généralement entre 1 et 30°C. A noter qu'il est possible dans certains cas de ne pas refroidir dutout après chauffage avant de commencer une phase d'adsorption. On envoie alors la totalité du gaz à épurer à travers un adsorbant chaud et c'est le gaz à traiter lui-même qui refroidit l'adsorbant. Pour cela, il faut que le front de chaleur avance plus rapidement que le front d'impuretés. Cela peut être le cas si on veut arrêter des traces d'un composé qui s'adsorbe très facilement.

On appelle généralement temps de cycle, la durée au bout de laquelle un adsorbeur revient dans l'état qu'il avait au départ. Le temps de phase correspond au temps de cycle divisé par le nombre d'adsorbeurs utilisés dans le procédé. Ici, on décrit le cas le plus fréquent correspondant à 2 adsorbeurs mais on pourrait aussi bien si nécessaire utiliser 3 ou 4 adsorbeurs sans sortir du principe de l'invention.

Sur la figure 1.a, le gaz à traiter 10 est séché et décarbonaté dans l'adsorbeur pour donner le gaz épuré 11. Le gaz 18 est issu de la dépressurisation de l'adsorbeur jusqu'à la pression de régénération. Le chauffage se fait par une fraction du gaz épuré 13 réchauffée dans le réchauffeur 50 avant d'être introduit dans l'adsorbeur. Lorsque la quantité de chaleur introduite est suffisante pour désorber les impuretés, le réchauffeur est arrêté ou contourné et la fraction 15 du gaz épuré permet de refroidir l'adsorbant. Une dernière fraction de ce gaz 17 sert à repressuriser l'adsorbeur jusqu'à la haute pression.

Les fractions 12, 14 et 16 contiennent les impuretés mais essentiellement du gaz de synthèse. Afin d'éviter que ce gaz ne soit perdu, ces fractions sont soit généralement recyclée dans le gaz de synthèse à l'amont d'une première unité de purification (lavage avec un solvant par exemple), soit utilisées dans un procédé tolérant ces impuretés. Le cas échéant, ces fractions peuvent être utilisées comme gaz de combustion.

La figure 1.b correspond à l'invention. Le gaz de régénération 20 est de l'azote qui sert à la fois pour le chauffage (fraction 21) et le refroidissement (22). Notons que dans le cadre de l'invention, le gaz de chauffage et le gaz de refroidissement sont généralement le même gaz mais peuvent être éventuellement différents, le gaz de chauffage étant alors appelé habituellement gaz de régénération alors que le refroidissement peut se faire par exemple par le gaz épuré ou le gaz à traiter. Dans ce cas, le refroidissement se fait préférentiellement à la pression d'adsorption. Cette étape est suivie par une étape additionnelle de balayage en basse pression au moyen d'une fraction du gaz de synthèse épuré.

Il est important de noter que pour les adsorbants utilisés (en particulier pour la zéolite pour arrêter le CO2), le monoxyde de carbone CO s'adsorbe préférentiellement à l'azote et qu'il déplace donc ce constituant, c'est-à-dire que le CO s'adsorbe et désorbe l'azote qui était retenu dans l'adsorbant. Cela aide donc à enlever l'azote tout en limitant les pertes en CO qui est souvent le composé ayant le plus de valeur.

L'azote de régénération est généralement envoyé à la torche sauf lorsqu'une application particulière lui a été trouvé. Ce point sera abordé ultérieurement. Il n'est pas à priori recyclé dans le procédé puisqu'on cherche au contraire à l'éliminer du gaz de synthèse.

La quantité de gaz envoyé lors de cette étape de balayage peut être optimisée de façon à ce que la spécification en azote, ou plus généralement en gaz neutre, soit juste atteinte dans le gaz épuré.

Pour ce type d'application, la limite en N2 ira par exemple de quelques centaines de ppm à quelques pourcent molaire.

Dans la majorité des cas, la durée du balayage sera inférieure à 30 minutes, préférentiellement inférieure à 15 minutes et le débit (17) prélevé sur le gaz épuré représentera moins de 10% de ce débit, préférentiellement sera de l'ordre de 5%.

Exprimé par rapport au temps de cycle, la durée du balayage sera préférentiellement inférieure à 10% et plus préférentiellement de 5% maximum.

Si pour une raison quelconque la pression de régénération est sensiblement supérieure à la pression atmosphérique, mettons par exemple entre 4 et 10 bar abs, il pourra être intéressant de faire le balayage à une pression plus basse, proche de la pression atmosphérique.

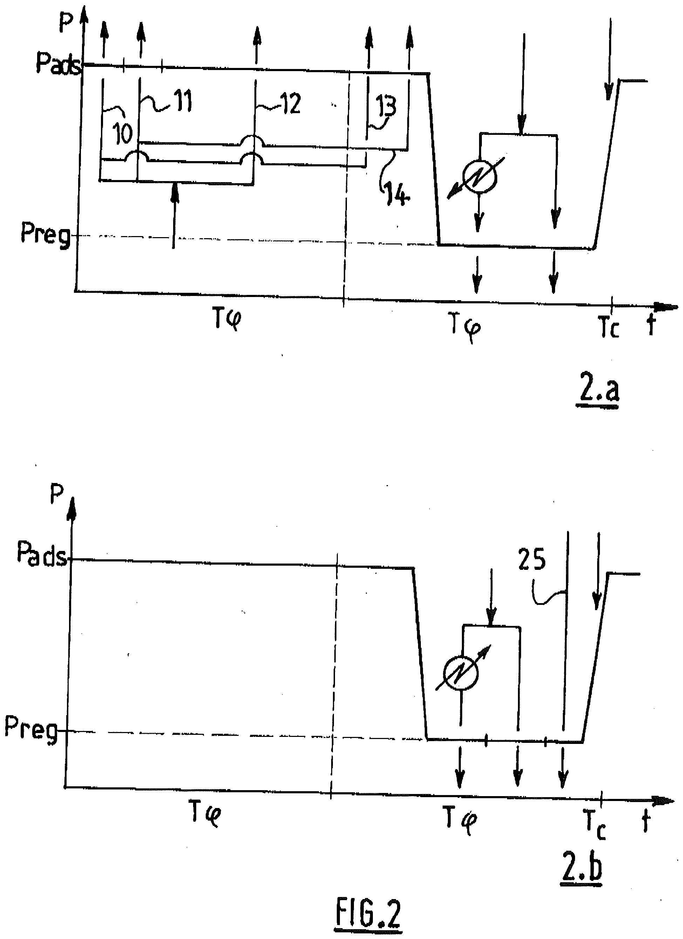

La Figure 2 montre un cycle de la même famille décrit dans le brevet EP 1 458 461. Par rapport au précédent, ce cycle intègre des étapes où les deux adsorbeurs sont simultanément en production.

La Figure 2.a montre le schéma de base et la figure 2.b correspond à l'invention avec l'addition du flux 25 qui permet de chasser au moins une partie de l'azote de l'adsorbant.

L'adsorbeur venant d'être régénéré ne reçoit pendant un certain temps qu'une fraction - 10-du débit de gaz à épurer, généralement de 5 à 15% ; l'autre fraction -13- (85 à 95%) est envoyée à l'autre adsorbeur toujours en épuration. Généralement cette étape est suivie d'une étape durant laquelle les 2 adsorbeurs fonctionnent en parallèle (flux 11 et 14). Ces étapes qui n'étaient pas conçues à l'origine pour diminuer la teneur en azote dans le gaz épuré mais pour limiter les variations de teneur en CO et en température jouent également un rôle favorable vis-à-vis de l'azote et permettent de limiter au maximum le balayage mentionné précédemment. Elles pourront donc avantageusement être utilisées conjointement avec ledit balayage.

Si le problème lié à l'azote est beaucoup plus un problème de pic que de quantité et/ou si les conséquences d'un pic d'azote sont très importantes pour le procédé aval, on pourra installer en outre sur le gaz épuré un adsorbeur jouant le rôle d'écrêteur ou de retardateur.

On notera qu'il n'est pas nécessaire que le fluide 25 soit du gaz à traiter épuré. Selon le contexte industriel, un certain nombre de flux peuvent convenir à partir du moment où ils sont essentiellement sec et exempt de CO2. Il peut s'agir dans le cas de fractionnement cryogénique du gaz de synthèse, de gaz de composition variée issu de la boîte froide. Ces gaz vont généralement contenir du H2, CO, CH4 et être disponibles à des pressions variées.

Dans d'autres contexte, il peut s'agir de mélange H2/CO pour lesquels une teneur plus ou moins importante en N2 n'a pas d'effet sensible.

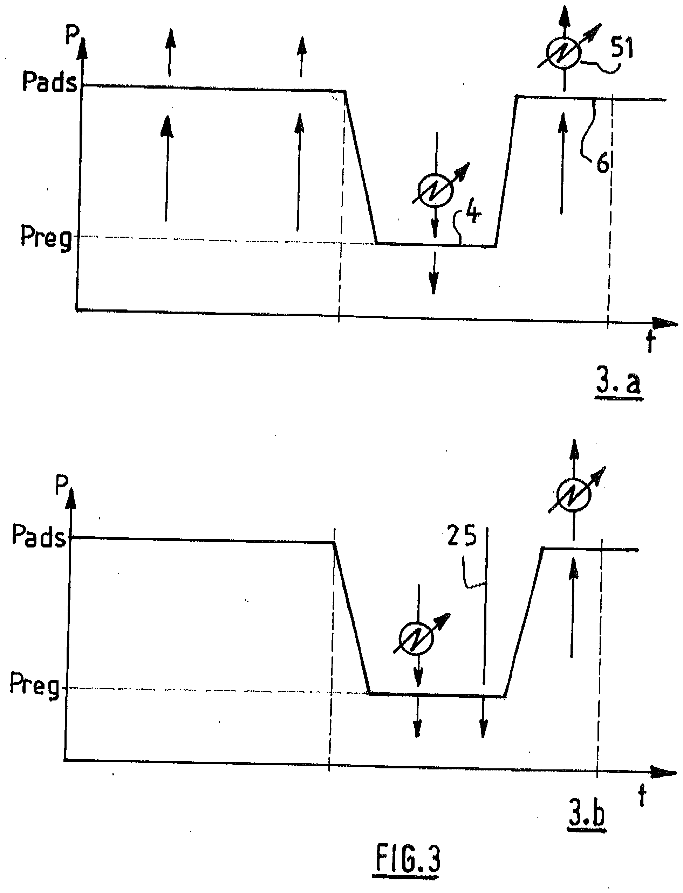

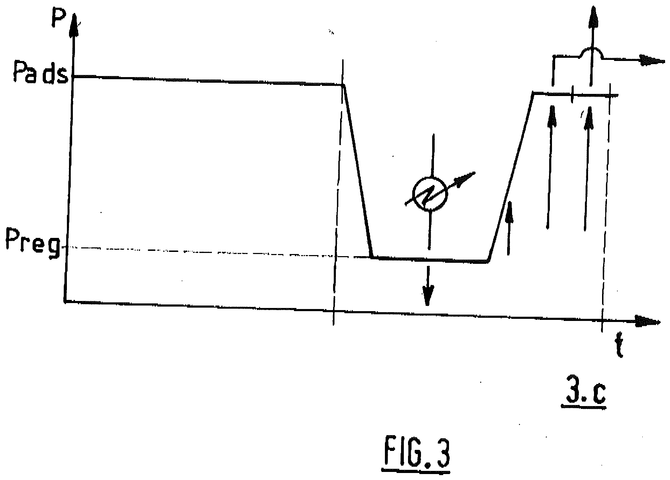

La figure 3 correspond à un cycle ne présentant pas d'étape de refroidissement à proprement parler.

L'étape de chauffage 4 est immédiatement suivie d'une étape de repressurisation (on se place dans le cas où la pression de régénération -chauffage- est inférieure à la pression d'adsorption, ce qui n'est pas forcément le cas). Le refroidissement de l'adsorbant s'effectue directement par le gaz à traiter. Le gaz chaud en sortie est éventuellement refroidi si nécessaire via l'échangeur 51.

Le cycle selon la figure 3.b, correspondant à l'invention, comporte l'étape additionnelle de balayage de l'adsorbeur via un gaz exempt ou pauvre en N2. On notera que l'adsorbeur est alors partiellement chaud et que ce balayage constitue une partie de l'étape de refroidissement.

La figure 3.c présente une variante pour laquelle le balayage destiné à éliminer l'azote s'effectue en haute pression, le gaz produit tant qu'il n'est pas à la spécification n'étant pas utilisé. Couplé avec les principes développés sur la Figure 2, le débit de gaz à traiter utilisé ne peut représenter qu'une fraction du débit total.

Ce schéma avec régénération à l'azote suivi d'un balayage avec un gaz pauvre ou exempt d'azote est particulièrement bien adapté lorsqu'à l'amont de l'épuration le gaz de synthèse a subi une première épuration au moyen d'un solvant. En effet, ce type de lavage peut nécessiter une étape de stripping du liquide de lavage pour en extraire un certain nombre d'impuretés. Il est courant d'utiliser un flux d'azote en basse ou moyenne pression (< 10 bar abs) à cette fin. On pourra utiliser cette fraction N2, tout ou en partie, pour régénérer l'épuration avant de l'envoyer à l'unité de lavage.

Un exemple selon l'invention est le cas dans lequel le gaz de synthèse est issu d'un procédé de lavage au méthanol en basse température ; procédé comprenant une étape de régénération du liquide de lavage par stripage à l'azote. Ce flux, en totalité ou en partie, est utilisé préalablement pour régénérer l'adsorbant servant à retenir les traces de méthanol, le CO2 résiduel et éventuellement les traces d'hydrocarbures C2+, de NOx. Cette épuration par adsorption se fait généralement en basse température, à la température de sortie de la colonne de lavage au méthanol, généralement de -30 à -70°C. Le chauffage se fait selon l'invention avec l'azote porté à une température comprise entre 100 et 220°C, généralement entre 150 et 200°C. L'azote sert aussi généralement à refroidir l'adsorbant jusqu'à température ambiante. Le refroidissement final se fait généralement au moyen du gaz à traiter. Le gaz de synthèse ainsi épuré est ensuite traité dans une boîte froide pour produire une fraction CO. L'azote se retrouvant alors dans la production CO - à moins de rajouter des équipements onéreux et consommateurs d'énergie -, il est très intéressant, suivant l'invention d'effectuer un balayage avec du gaz à traiter détendu de façon à éliminer l'essentiel de l'azote adsorbé et contenu dans les volumes morts de l'adsorbeur. L'azote résiduel éventuel est ensuite désorbé pendant la mise en froid avec une fraction du gaz à traiter. Compte tenu du balayage précédent, ce flux peut-être mélangé à l'autre fraction du gaz épuré sans dépasser la valeur maximale pour la teneur en azote.

## Revendications

1. Procédé TSA de purification par adsorption d'un gaz de synthèse comprenant de l'hydrogène, du CO et/ou du méthane, mettant en œuvre au moins un adsorbeur présentant au moins un adsorbant sur lequel le monoxyde de carbone s'adsorbe préférentiellement à l'azote et soumis à un cycle de pression comportant au moins une étape d'adsorption, une étape de dépressurisation, une étape de régénération par chauffage au moyen d'un gaz de régénération, une étape de refroidissement de l'adsorbant et une étape de repressurisation , **caractérisé en ce que**:
- le gaz de régénération comprend de l'azote à plus de 95% molaire ; et
- le cycle de pression comprend un balayage de l'adsorbant, après la phase de chauffage ou la phase de refroidissement, au moyen d'un gaz de balayage qui est du gaz de synthèse, de préférence du gaz de synthèse épuré .

2. Procédé selon la revendication 1, **caractérisé en ce qu'**on régule le débit du gaz de balayage et/ou la durée du balayage de manière à éliminer de l'adsorbant au moins une partie de l'azote devant présenter une concentration inférieure ou égale à 5% molaire dans le gaz de synthèse épuré.

3. Procédé selon l'une des revendications 1 ou 2, **caractérisé en ce que** l'adsorbeur fonctionne en continu.

4. Procédé selon la revendication 1 à 3, **caractérisé en ce que** :
- l'adsorption s'effectue à une première pression P1 ;
- la régénération s'effectue à une seconde pression P2 inférieure à P1 ; et
- le balayage s'effectue une troisième pression P3 inférieure à P1, de préférence égale ou inférieure à P2.

5. Procédé selon l'une des revendications 1 à 4, **caractérisé en ce que** le mélange gazeux à traiter est un gaz de synthèse issu d'un procédé de lavage au méthanol en basse température.

6. Procédé selon l'une des revendications 1 à 5, **caractérisé en ce que** ledit procédé est un procédé TSA comportant des étapes de dépressurisation et de repressurisation, l'étape de repressurisation mettant en œuvre un circuit de repressurisation et le balayage étant effectué par le circuit de repressurisation.

## Patentansprüche

1. TSA-Reinigungsverfahren durch Adsorption eines Wasserstoff, CO und/oder Methan umfassenden Synthesegases unter Verwendung mindestens eines Adsorbers, der mindestens ein Adsorptionsmittel aufweist, auf dem das Kohlenmonoxid vorzugsweise an Stickstoff adsorbiert wird, und das einem Druckzyklus unterzogen wird, der mindestens einen Adsorptionsschritt, einen Druckentlastungsschritt, einen Regenerationsschritt durch Erhitzen mittels eines Regenerationsgases, einen Adsorptionsmittelkühlschritt und einen Schritt einer erneuten Druckbeaufschlagung umfasst, **dadurch gekennzeichnet, dass**:
- das Regenerationsgas mehr als 95 Mol-% Stickstoff umfasst; und
- der Druckzyklus nach der Heizphase oder der Kühlphase ein Spülen des Adsorptionsmittels mittels eines Spülgases umfasst, bei dem es sich um Synthesegas, bevorzugt gereinigtes Synthesegas, handelt.

2. Verfahren nach Anspruch 1, **dadurch gekennzeichnet, dass** der Durchsatz des Spülgases und/oder die Dauer des Spülens so reguliert werden, dass aus dem Adsorptionsmittel zumindest ein Teil des Stickstoffs entfernt wird, der im gereinigten Synthesegas eine Konzentration von weniger als oder gleich 5 Mol-% aufweisen muss.

3. Verfahren nach einem der Ansprüche 1 bis 2, **dadurch gekennzeichnet, dass** der Adsorber kontinuierlich betrieben wird.

4. Verfahren nach Anspruch 1 bis 3, **dadurch gekennzeichnet, dass**:
- die Adsorption bei einem ersten Druck P1 erfolgt;
- die Regeneration bei einem zweiten Druck P2 erfolgt, der niedriger als P1 ist; und
- das Spülen bei einem dritten Druck P3 erfolgt, der niedriger als P1, bevorzugt gleich oder niedriger als P2 ist.

5. Verfahren nach einem der Ansprüche 1 bis 4, **dadurch gekennzeichnet, dass** es sich bei dem zu behandelnden Gasgemisch um ein Synthesegas aus einem Tieftemperatur-Methanolwaschverfahren handelt.

6. Verfahren nach einem der Ansprüche 1 bis 5, **dadurch gekennzeichnet, dass** es sich bei dem Verfahren um ein TSA-Verfahren handelt, das Schritte der Druckentlastung und der erneuten Druckbeaufschlagung aufweist, wobei für den Schritt der erneuten Druckbeaufschlagung ein Kreislauf zur erneuten Druckbeaufschlagung verwendet wird und das Spülen durch den Kreislauf zur erneuten Druckbeaufschlagung erfolgt.

## Claims

1. TSA method of purification by adsorbing a synthetic gas comprising hydrogen, CO and/or methane, implementing at least one adsorber having at least one adsorbent on which the carbon monoxide is absorbed preferably to nitrogen and subjected to a pressure cycle including at least one adsorption step, a depressurising step, a regenerating step by heating using a regeneration gas, a cooling step of the adsorbent and a repressurising step, **characterised in that**:
- the regeneration gas comprises more than 95 mol % nitrogen; and
- the pressure cycle comprises scavenging the adsorbent, after the heating phase or the cooling phase, using a scavenging gas which is a synthetic gas, preferably purified synthetic gas.

2. Method according to claim 1, **characterised in that** the flow rate of the scavenging gas and/or the duration of the scavenging is adjusted in such a way as to remove from the adsorbent at least a portion of the nitrogen that should have a concentration less than or equal to 5 mol % in the purified synthetic gas.

3. Method according to any of claims 1 or 2, **characterised in that** the adsorber operates continuously.

4. Method according to claim 1 to 3, **characterised in that**:
- the adsorption is carried out at a first pressure P1;
- the regeneration is carried out at a second pressure P2 lower than P1; and
- the scavenging is carried out at a third pressure P3 less than P1, preferably lower than or equal to P2.

5. Method according to any of claims 1 to 4, **characterised in that** the gas mixture to be treated is a synthetic gas which is produced by a method of scrubbing with methanol at low temperature.

6. Method according to any of claims 1 to 5, **characterised in that** said method is a TSA method including steps of depressurising and repressurising, the step of repressurising involving a repressurising circuit and the scavenging being carried out by the repressurising circuit.
